# EUROPÄISCHE PATENTSCHRIFT

(11) **EP 0 373 292 B1**
(45) Veröffentlichungstag und Bekanntmachung des Hinweises auf die Patenterteilung: **11.08.1993**
(21) Anmeldenummer: 89113407.4
(22) Anmeldetag: 21.07.1989
(51) Int. Cl.: B23B 51/00

(54) **Bohrwerkzeug für metallische Werkstoffe, Kunststoffe und dergl.**
Boring tool for metal workpieces, plastics and the like
Outil de perçage pour matériaux métalliques, plastiques et similaires

(30) Priorität: 15.12.1988 DE 3842209
(43) Veröffentlichungstag der Anmeldung: 20.06.1990
(73) Patentinhaber: WALTER Aktiengesellschaft, D-72010 Tübingen (DE)
(72) Erfinder: Bohnet, Siegfried, D-7406 Mössingen (DE); Gräfe, Werner, D-7410 Reutlingen (DE)
(74) Vertreter: Rüger, Rudolf, Dr.-Ing.

(56) Entgegenhaltungen:
- CH-A- 625 443
- DE-A- 2 555 979
- DE-A- 2 751 255
- DE-A- 2 834 083
- GB-A- 2 132 517
- US-A- 3 966 349
- US-A- 4 131 383
- US-A- 4 563 113
- US-A- 4 648 760

## Beschreibung

Die Erfindung betrifft ein Bohrwerkzeug für metallische Werkstoffe, Kunststoffe u.dgl.

Bei einem in der DE-A-25 55 979 beschriebenen Bohrwerkzeug ist es bekannt, an dem eine im wesentlichen zylindrische Querschnittsgestalt aufweisenden Bohrerkörper zwei Schneideinsätze vorzusehen, von denen ein radial außenliegender erster Schneideinsatz mit einer äußeren Schneidenecke über den Umfang des Bohrerkörpers radial vorragt. Der zweite Schneideinsatz liegt mit seiner wirksamen Hauptschneide radial im Abstand innerhalb des Flugkreises der äußeren Schneidenecke des ersten Schneideinsatzes. Die beiden jeweils mit einer Eckenfase versehenen Schneideinsätze liegen mit ihrer wirksamen Hauptschneide auf einer gemeinsamen Durchmesserebene des Bohrerkörpers, wobei der radial innenliegende Schneideinsatz mit seiner Hauptschneide über die Bohrerachse ragend und die Bohrerachse schneidend angeordnet ist. Bei diesem Bohrwerkzeug ist durch entsprechende Bemessung der wirksamen Hauptschneiden der beiden Schneideinsätze sowie durch deren spezielle Einstellage in dem Bohrerkörper angestrebt, im Betrieb einen möglichst vollständigen Radialkraftausgleich zu erzielen. In der Praxis gelingt dies u.a. wegen der genormten vorgegebenen Größe der Schneideinsätze nicht bei allen Bohrerdurchmessern in vollkommener Weise, so daß unter ungünstigen Umständen eine kleine resultierende Radialkraft unbestimmter Größe quer zu den Hauptschneiden auftreten kann. Es besteht deshalb u.a. die Gefahr, daß beim Herausbewegen des Bohrwerkzeuges aus dem Bohrloch die Bohrungswand beschädigt wird.

Eine grundsätzlich ähnliche Anordnung der beiden Schneideinsätze weist auch eine Weiterentwicklung dieses Bohrwerkzeuges auf, die in der DE-A-28 34 083 beschrieben ist. Zur Verbesserung der Schnittverhältnisse im Bereiche der Bohrerachse ist zumindest der der Bohrerachse benachbarte Schneideinsatz mit einer die Bohrerachse schneidenden Teilschneide in den Bohrerkörper eingesetzt, so daß bei der Zerspanung in der Mitte im Bohrungsgrund ein kleiner kegeliger Zapfen stehen bleibt, der stetig durch diese Teilschneide abgearbeitet wird. Dadurch wird auch eine Verbesserung der Führung des Bohrwerkzeuges beim Bohren erzielt.

Mit zwei Schneideinsätzen ist auch ein anderes aus der DE-A-27 51 255 bekanntes Bohrwerkzeug bestückt, bei dem ein Schneideinsatz bis zum äußeren Bearbeitungsdurchmesser reichend und der andere Schneideinsatz innerhalb des Schneidkreises dieses am Umfang liegenden Schneideinsatzes an die Bohrerachse angrenzend bzw. dieselbe geringfügig überschreitend angeordnet ist. Beide Schneideinsätze sind in zur Schaftachse hin verlaufenden Radialebenen angeordnet, die einen von 180° abweichenden Winkel einschließen, wobei die Anordnung derart getroffen ist, daß die Radialebene des inneren Schneideinsatzes zum Ausgleich der auf dem Bohrerschaft einwirkenden radialen Kräfte entgegen der Drehrichtung des Bohrers um einen Winkel gegen den am Umfang angeordneten Schneideinsatz nach rückwärts abgewinkelt ist.

All den vorgenannten bekannten Bohrwerkzeugen liegt der Gedanke zugrunde, einen möglichst vollkommenen Radialkraftausgleich zu erzielen und damit zu vermeiden, daß der Bohrerkörper bei der Zerspanung eine elastische seitliche Auslenkung erfährt.

Auf einen solchen Radialkraftausgleich verzichtet bewußt ein aus der US-A-3 966 349 bekanntes Bohrwerkzeug mit zwei Schneideinsätzen, von denen ein Schneideinsatz mit seiner Hauptschneide die Bohrerachse schneidend angeordnet ist und der andere im Bereiche des Umfangs des Werkzeugkörpers angeordnete Schneideinsatz mit seiner Hauptschneide im wesentlichen auf einer außermittigen Sehne zu dem zylindrischen Werkzeugkörper liegt. An einer Stelle des Umfangs des Werkzeugkörpers ist eine radial elastisch abgefederte Stützleiste vorgesehen, die genau in der Wirkrichtung der durch entsprechende Wahl der Anordnung der beiden Schneideinsätze in ihrer Größe und Richtung bestimmten resultierenden Radialkomponente der Schnittkraft liegt. Beim Bohren liegt diese Stützleiste an der Wandung des Bohrloches an, so daß sie den Werkzeugkörper radial abstützt. Sie ist auf ihrer Oberfläche so gestaltet, daß, wenn sie beim Bohren radial gegen die Wandung der Bohrung mit einem Druck angepreßt wird, der die Wandung auskleidende Schmiermittelfilm nicht zerstört wird. Auch bei diesem Bohrwerkzeug besteht die Gefahr, daß bei empfindlicheren Werkstücken beim Herausbewegen des Bohrwerkzeuges aus der fertiggestellten Bohrung die Bohrungswand durch eine unerwünschte Riefenbildung beschädigt wird, abgesehen davon, daß die Anordnung einer Stützleiste aus verschiedenen Gründen häufig unerwünscht ist.

Aufgabe der Erfindung ist es deshalb, ein Bohrwerkzeug zu schaffen, das sich durch hohe Schnittleistung und günstige Schnittverhältnisse auszeichnet und bei dem die Gefahr einer Beeinträchtigung der Bohrungswand beim Herausbewegen des Bohrwerkzeuges aus dem fertigen Bohrloch auf ein Minimum reduziert ist.

Zur Lösung dieser Aufgabe weist das Bohrwerkzeug gemäß der Erfindung die Merkmale des Patentanspruches 1 auf.

Durch die spezielle Anordnung der beiden Schneideinsätze an dem Bohrerkörper wird erreicht, daß beim Zerspanen kein vollständiger Ausgleich der radial wirkenden Schnittkraftkomponenten erfolgt, mit dem Ergebnis, daß die an den wirksamen Hauptschneiden angreifenden Schnittkräfte eine von der Drehachse nach außen gerichtete resultierende Radialkraftkomponente in einer Durchmesserebene ergeben, die die radial außen liegende Teilschneide des radial äußeren Schneideinsatzes zumindest berührt.

Dabei ist zweckmäßigerweise der radial innere und/oder der radial äußere Schneideinsatz über seine der wirksamen Teilschneide zugeordnete innere bzw. äußere Schneidenecke gegenüber der die Teilschneiden enthaltenden Durchmesserebene des Bohrerkörpers gekippt angeordnet, derart, daß eine auf der der Hauptschneide zugeordneten Breitseite des Schneideinsatzes aufliegende gedachte Berünrungsebene mit der Durchmesserebene einen spitzen Winkel einschließt.

Bei Schneideinsätzen mit positiver Schneidengeometrie liegt die Berührungsebene zumindest bei dem äußeren Schneideinsatz mit Vorteil hinter der Durchmesserebene, entgegen der Drehrichtung des Bohrerkörpers betrachtet; als vorteilhaft hat es sich erwiesen, wenn dieser Winkel von 0° bis 12° beträgt.

Die Hauptschneiden der Schneideinsätze können - sowohl im Bereiche der Teilschneiden als auch der daran anschließenden verbleibenden Anteile - entsprechend den jeweiligen Einsatzbedingungen zweckentsprechend gestaltet sein. Ihnen sind bei Schneideinsätzen mit positivem Schneidwinkel Spanflächen zugeordnet, die als Spanleitstufen, als Mulden oder auch in Grübchenform ausgebildet sein können, wobei alle bekannten Spanleitstufenformen infrage kommen. Die Hauptschneiden selbst können gerade oder gekrümmt sein, wie auch die Schneideinsätze selbst dreieck-, viereck- oder mehreckförmig (polygonal) ausgebildet sein können. Für bestimmte Werkstoffe hat es sich im Hinblick auf die Verbesserung des Spanbruchs und auf die Stabilität des Schneideinsatzes im Zusammenhang mit der Erzeugung der resultierenden Radialkraft als von Vorteil erwiesen, wenn der an die jeweilige Teilschneide anschließende Anteil der Hauptschneide pfeilförmig mit einem gegenüber der Teilschneide erhabenen Schneidenbereich oder gegenüber der Teilschneide konkav vertieft mit jeweils entsprechend gestalteter Spanfläche ausgebildet ist. Bei der zuletzt genannten Ausführungsform kann der konkav vertiefte Bereich der Hauptschneide zweckmäßigerweise durch zwei zu einer tiefsten Stelle zusammenlaufende, im wesentlichen gerade Hauptschneidenabschnitte gebildet sein.

In der Praxis hat es sich als besonders vorteilhaft erwiesen, plattenförmige Schneideinsätze zu verwenden, die Octagonform mit vier sich regelmäßig wiederholenden Stirnseiten aufweisen, von denen jede im wesentlichen dachförmig mit einer mittig zwischen den benachbarten Schneidenecken verlaufenden Trennkante ausgebildet ist. Dabei können an jeder der vier Stirnseiten in Richtung der Trennkante aneinander anschließend zwei Stirnflächenabschnitte vorhanden sein, von denen einer durch die entsprechende Hauptschneide begrenzt ist und die einen stumpfen Winkel miteinander einschließen. Besonders einfache Verhältnisse ergeben sich, wenn die umsetzbaren Schneideinsätze als Lochplatten ausgebildet sind, wobei es außerdem von Vorteil ist, wenn die die Schneideinsätze aufnehmenden Ausnehmungen in achsparallel gerade genuteten Spanräumen des Bohrerkörpers mit zumindest einer gewölbten Spanraumwand ausgebildet sind.

Bei dem neuen Bohrwerkzeug bewirkt die resultierende Radialkraft beim Bohren eines Bohrloches stets ein geringfügiges radiales Auslenken des Bohrerkörpers, mit dem Ergebnis, daß das Bohrwerkzeug einen im Vergleich zu dem theoretischen Bohrlochdurchmesser etwas größeren Bohrlochdurchmesser erzeugt. Das Bohrwerkzeug kann deshalb leicht aus dem fertiggestellten Bohrloch herausbewegt werden, ohne daß die Gefahr einer Riefenbildung an der Bohrlochwandung gegeben wäre. Um diese geringfügige radiale Auslenkung zu ermöglichen, ist der Bohrerkörper radial nicht weiter abgestützt, d.h. in der Regel frei von seitlichen Stützleisten oder dergl. Einrichtungen.

Da der mit seiner Teilschneide die Drehachse des Bohrerkörpers schneidende zweite Schneideinsatz im radialen Abstand innerhalb des Flugkreises der Schneidenecke des äußeren ersten Schneideinsatzes liegt, braucht seine Breite nur so groß gewählt zu werden, daß sich die an der Stirnseite des Bohrerkörpers wirksamen beiden Hauptschneiden der beiden Schneideinsätze gegenseitig überlappen. Erforderlichenfalls können, insbesondere bei Bohrwerkzeugen für große Bohrlochdurchmesser, die an der Stirnseite des Bohrerkörpers wirksamen Hauptschneiden auch auf mehrere getrennte Schneideinsätze aufgeteilt werden, die zwischen dem radial äußeren ersten Schneideinsatz und dem radial inneren zweiten Schneideinsatz - und gegebenenfalls auch in Umfangsrichtung - verteilt angeordnet sind.

Selbstverständlich ist es erforderlichenfalls auch möglich, mehrere in Umfangsrichtung hintereinanderliegende erste und zweite Schneideinsätze vorzusehen, um damit die Schnittleistung auf mehrere wirksame Hauptschneiden aufzuteilen.

In der Zeichnung sind Ausführungsbeispiele des Gegenstandes der Erfindung dargestellt. Es zeigen:
- Fig. 1: ein Bohrwerkzeug gemäß der Erfindung, in perspektivischer schematischer Darstellung,
- Fig. 2: den Bohrerkörper des Bohrwerkzeuges nach Fig.1, in einer stirnseitigen Ansicht,
- Fig. 3: die Anordnung nach Fig. 2, unter Veranschaulichung einer abgewandelten Ausführungsform der Schneideinsätze, in einer entsprechenden Ansicht,
- Fig. 4: das Bohrwerkzeug nach Fig. 1, in einer schematischen Seitenansicht, im Ausschnitt, unter Veranschaulichung der Lage der Teilschneiden der beiden Schneideinsätze bezüglich einer Durchmesserebene des Bohrerkörpers,
- Fig. 5: einen Schneideinsatz des Bohrwerkzeugs nach Fig. 1, in einer perspektivischen vergrößerten Darstellung, und
- Fig. 6: einen Schneideinsatz des Bohrwerkzeugs nach Fig. 3, in einer vergrößerten perspektivischen Darstellung.

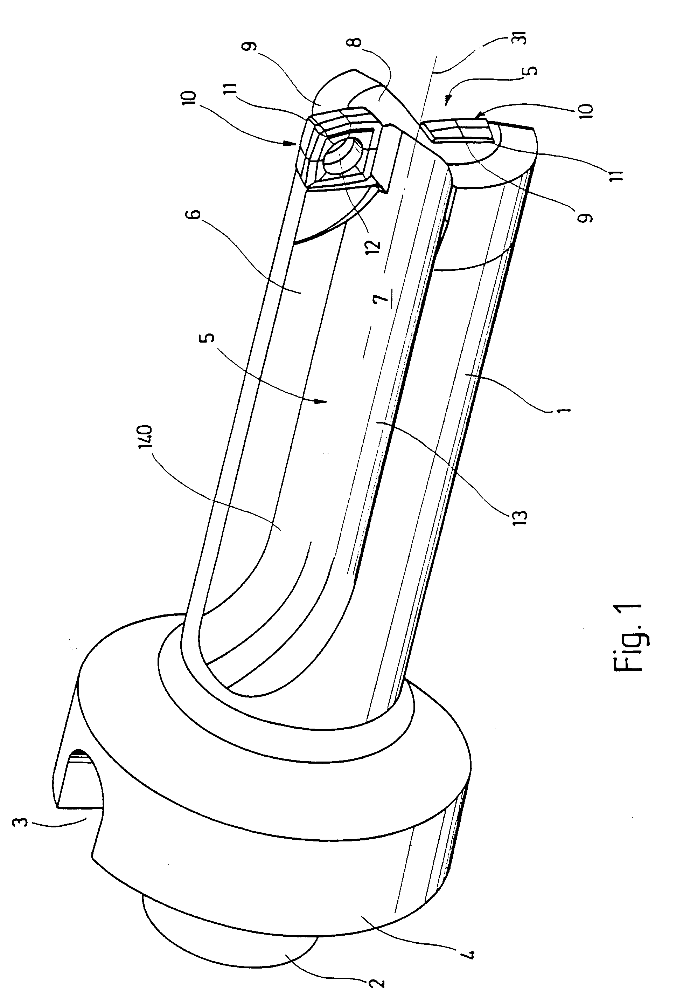

Das in Fig. 1 dargestellte Bohrwerkzeug weist einen schaftförmigen, im wesentlichen kreiszylindrischen Bohrerkörper 1 auf, an den sich einenends ein bei 2 angedeuteter koaxialer Spannzapfen anschließt, der zum Einsatz in eine entsprechende Aufnahmebohrung einer Antriebsspindel einer Bohrmaschine bestimmt und dem ein eine Mitnehmernut 3 aufweisender Flansch 4 größeren Durchmessers zugeordnet ist.

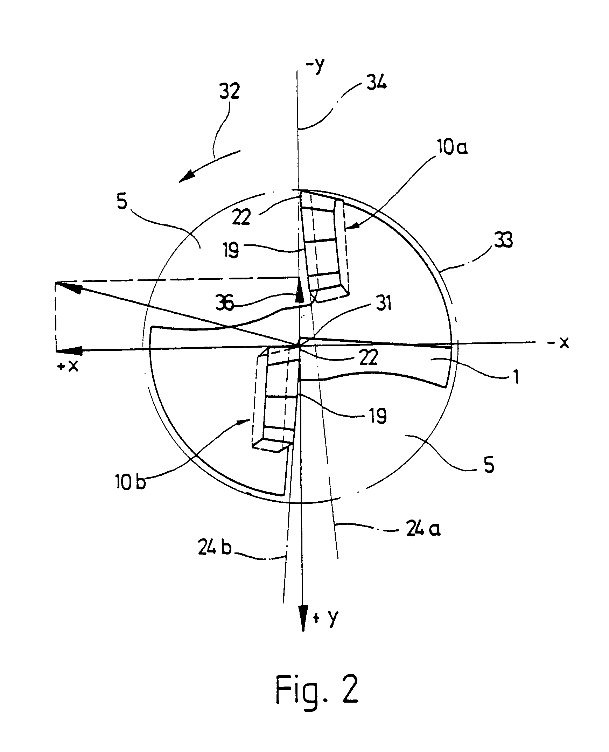

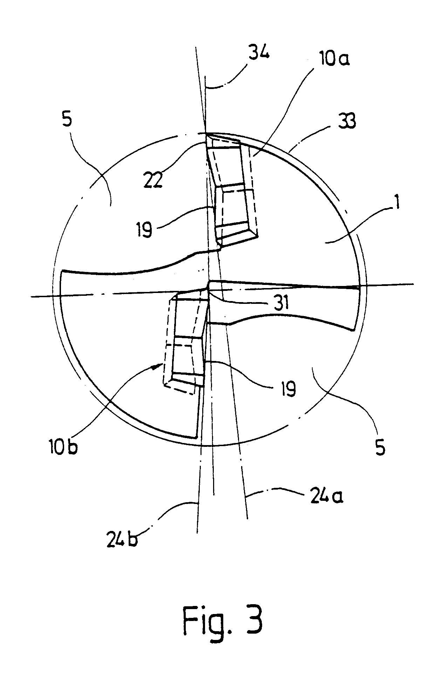

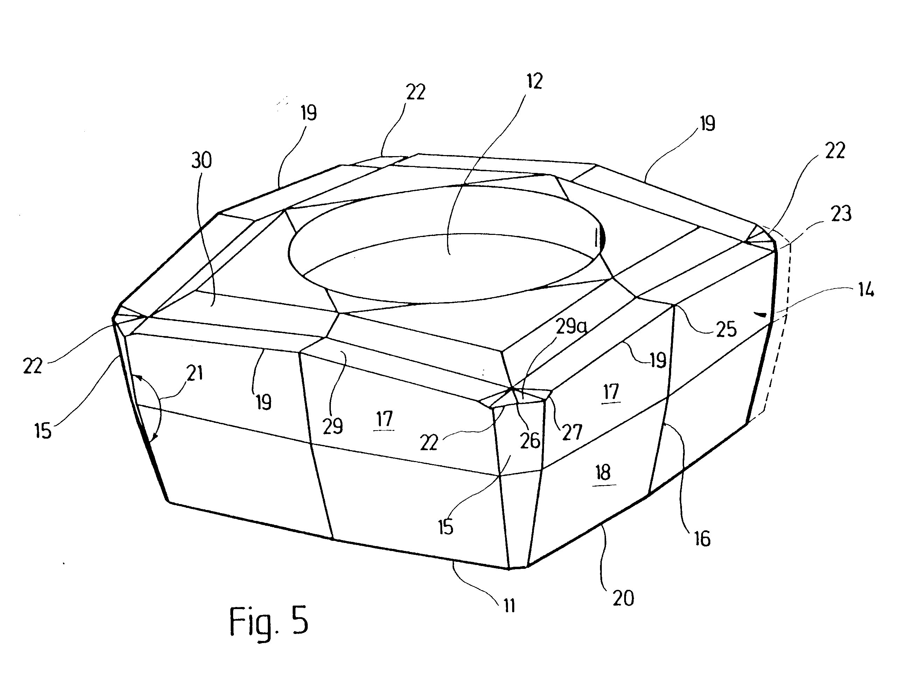

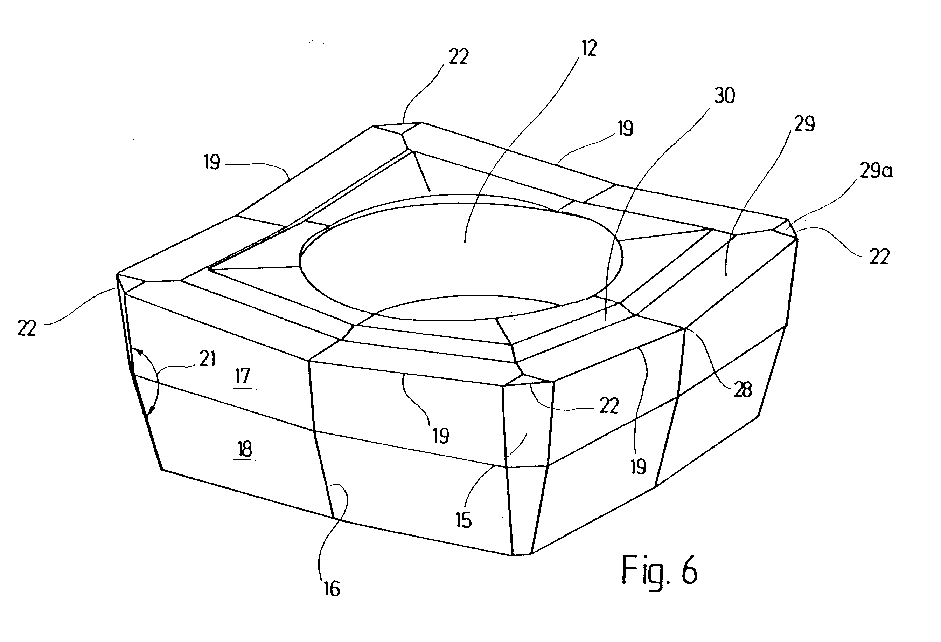

In dem aus Stahl bestehenden Bohrerkörper 1 sind zwei gerade genutete, achsparallele Spanräume 5 ausgebildet, von denen jeder von zwei etwa rechtwinklig aufeinander stehenden Seitenwänden 6, 7 begrenzt ist, die sich in der aus den Fig. 2,3 ersichtlichen Weise etwa in Radialrichtung erstrecken. Ausgehend von der Stirnfläche 8 sind in dem Bohrerkörper 1 im Bereiche der beiden Spanraumseitenwände 6 zwei im Querschnitt etwa rechteckige Ausnehmungen 9 angeordnet, in die in Gestalt von Hartmetall-Wendeschneidplatten ausgebildete Schneideinsätze 10 eingesetzt sind. Jeder der Schneideinsätze 10 ist in der insbesondere auch aus den Fig. 5,6 ersichtlichen Weise als Lochplatte mit einer ebenen Auflagefläche 11 und einem rechtwinklig zu dieser verlaufenden durchgehenden Befestigungsloch 12 gestaltet, das zur Aufnahme einer in eine entsprechende Gewindebohrung am Grund der Ausnehmung 9 eingeschraubten Befestigungs-Senkschraube dient, die der besseren Übersichtlichkeit wegen in Fig. 1 weggelassen ist.

Die gegenüberliegende Spanraumseitenwand 7 ist jeweils bei 13 am Spanraumrand gewölbt und im übrigen auch bei 140 ausgerundet.

Bei den dargestellten Ausführungsbeispielen weisen die plattenförmigen Schneideinsätze 10 eine octagonale Grundform auf, doch ist es grundsätzlich auch möglich, anders gestaltete Schneideinsätze, bspw. solche mit quadratischer oder dreiecksförmiger Grundform, zu benutzen. Jeder Schneideinsatz 10 ist mit vier sich ringsum regelmäßig wiederholenden Stirnseiten 14 ausgebildet, die sich an vier Eckenfasen 15 anschließen und von denen jede im wesentlichen dachförmig mit einer mittig zwischen den benachbarten Eckenfasen 15 verlaufenden und rechtwinklig auf der Grundfläche 11 stehenden Trennkante 16 ausgebildet ist. In Richtung der Trennkante 16 ist jede der vier Stirnseiten 14 in zwei aneinander anschließende Stirnflächenabschnitte 17,18 unterteilt, von denen der in den Fig. 5,6 obere Stirnflächenabschnitt 17 jeweils eine Hauptschneide 19 begrenzt und der untere Stirnflächenabschnitt 18 bei 20 die Grundfläche 11 schneidet. Die Stirnflächenabschnitte 17,18 schließen einen stumpfen Winkel 21 miteinander ein, was in gleicher Weise auch für die längs der Trennkante 16 aneinander anstoßenden Teile dieser Stirnflächenabschnitte 17 bzw. 18 gilt.

Durch die im Bereiche der oberen Stirnflächenabschnitte 17 liegenden Eckenfasen 15 sind Teilschneiden 22 begrenzt, von denen jede einen Teil einer anschließenden Hauptschneide 19 bildet. Jede Teilschneide 22 verbindet somit im Bereiche der der jeweiligen Eckenfase 15 zugeordneten (gedachten) Schneidenecke 23 - von denen eine in Fig. 5 gestrichelt angedeutet ist - aneinanderstoßende Hauptschneidkanten 19 miteinander.

Alle Hauptschneiden 19 können in der aus Fig.2 zu entnehmenden Weise gerade ausgebildet sein und gemeinsam mit den Teilschneiden 22 in einer gemeinsamen Ebene 24 liegen, die auf der zugeordneten Breitseite des Schneideinsatzes 10 aufliegt und rechtwinklig zu der Achse des Befestigungsloches 12 verläuft.

Bei der in den Fig. 1,5 dargestellten Ausführungsform sind die an die jeweilige Teilschneide 22 sich anschließenden verbleibenden Anteile der Hauptschneiden 19 jeweils pfeilförmig mit einem gegenüber den Teilschneiden 22 erhabenen Schneidenbereich ausgebildet, dessen höchster Punkt, an dem sich die benachbarten geraden Abschnitte der beiden Hauptschneidkantenanteile treffen, mit 25 bezeichnet ist. Auch die Teilschneiden 22 sind in diesem Falle pfeilförmig mit einem mittigen, erhabenen Schneidenbereich ausgeführt, welcher bei 26 (Fig. 5) liegt, wobei jede der Hauptschneiden 19 über einen schrägen Schneidenbereich 27 mit der zugehörigen Teilschneide 22 verbunden ist.

Bei der Ausführungsform nach den Fig. 3,6 der Schneideinsätze 10 ist der an die jeweilige Teilschneide 22 anschließende Anteil der Hauptschneide 19 gegenüber der Teilschneide 22 konkav vertieft, wobei der konkav vertiefte Bereich der Hauptschneide durch zwei zu einer tiefsten Stelle bei 28 zusammenlaufende, im wesentlichen gerade Hauptschneidenabschnitte gebildet ist, wie dies aus Fig. 6 augenfällig hervorgeht.

Bei allen Ausführungsformen schließt sich an die Hauptschneide 19 nach innen zu jeweils eine entsprechend gestaltete Spanfläche 29 an, die im Bereiche der Teilschneiden 22 mit 29a bezeichnet ist. Mit 30 ist eine an die Spanfläche 29 fortsetzende Spanbrecherstufe bezeichnet.

Die in den Fig. 2, 5 und 6 dargestellten Schneideinsätze arbeiten jeweils mit positiver Schneidengeometrie; sie sind ersichtlich mit einseitigen Spanflächen 29, 29a ausgebildet, d.h. jeder der umsetzbaren Schneideinsätze 10 verfügt über vier nacheinander abarbeitbare Hauptschneidkanten 19.

Die beiden Ausnehmungen 9 im Bereiche der Spanraumseitenwände 6 sind in dem Bohrerkörper 1 in unterschiedlichem radialem Abstand zu der Drehachse 31 des Bohrerkörpers 1 angeordnet, derart, daß der radial äußere erste Schneideinsatz 10a mit seiner (gedachten) Schneidenecke 23 und der dieser zugeordneten Teilschneide 22 radial über den Bohrerkörper 1 vorragt. Der von der wirksamen Teilschneide 22 des Schneideinsatzes 10a beim Umlauf in der in den Fig. 2,3 bei 32 angedeuteten Drehrichtung beschriebene Flugkreis ist mit 33 bezeichnet.

Im radialen Abstand innerhalb dieses Flugkreises 33 ist der zweite radial innere Schneideinsatz 10b so angeordnet, daß er mit seiner innenliegenden Teilschneide 22 der wirksamen Hauptschneide 19 die Drehachse 31 schneidet.

Beide Schneideinsätze 10a, 10b liegen aber mit ihrer wirksamen Teilschneide 22 in einer die Drehachse 31 des Bohrerkörpers 1 enthaltenen Durchmesserebene, die in den Fig. 1,2 mit 34 bezeichnet ist, wobei die beiden Schneideinsätze 10a, 10b - von der Stirnseite des Bohrerkörpers 1 her gesehen - sich auf gegenüberliegenden Seiten der Durchmesserebene 34 befinden.

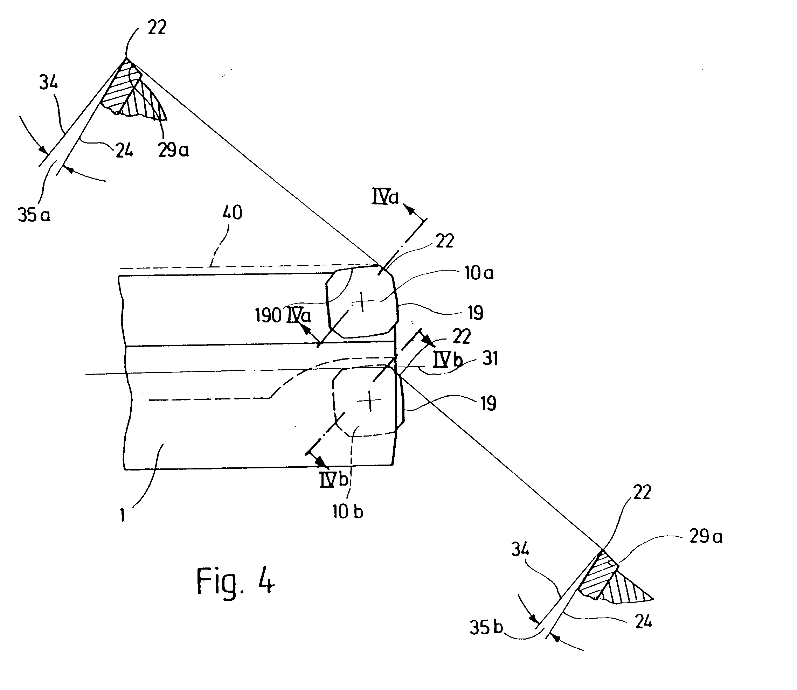

Gleichzeitig sind die beiden Schneideinsätze 10a, 10b gegenüber der Durchmesserebene 34 um die ihrer jeweils wirksamen Teilschneide 22 zugeordnete Schneidenecke um einen vorbestimmten Winkel gekippt, wie dies in Fig. 4 schematisch angedeutet ist. Um diesen in Fig. 4 mit 35a bzw. 35b bezeichneten kleinen spitzen Winkel veranschaulichen zu können, ist der jeweilige Schneideinsatz 10a bzw. 10b in Fig. 4 jeweils entsprechend einem Schnitt IVa-IVa bzw. IVb-IVb der Fig. 4 durch die entsprechende Teilschneide 22 herausgeklappt dargestellt. Ersichtlich ist der im vorliegenden Fall jeweils 0^{o} bis 12^{o}, hier 6^{o} betragende Winkel 35a bzw. 35b jeweils zwischen der Durchmesserebene 34 und der rechtwinklig zu der Achse des Befestigungsloches 12 verlaufenden Berührungsebene 24 auf der den Hauptschneiden 19 zugeordneten Breitseite des jeweiligen Schneideinsatzes begrenzt. Diese Berührungsebene 24 enthält für den radial äußeren Schneideinsatz 10a eine Sehne zu dem Flugkreis 33, wie dies aus Fig. 2 augenfällig zu entnehmen ist. Im übrigen liegen die den beiden Schneideinsätzen 10a, 10b zugeordneten Winkel 35a, 35b jeweils auf entgegengesetzten Seiten der Durchmesserebene 34, wobei der Winkel 35a des Schneideinsatzes 10a auf der der Drehrichtung 32 entgegenweisenden Seite dieser Durchmesserebene 34 sich befindet.

Durch diese spezielle Anordnung der beiden Schneideinsätze 10a, 10b an dem Bohrerkörper 1 ergibt sich im Betrieb kein vollständiger Ausgleich der in der X- und in der Y-Richtung der rechtwinklig zu der Drehachse 31 verlaufenden X-/Y-Ebene wirkenden Schnittkräfte, mit dem Ergebnis, daß an dem Bohrerkörper 1 eine Radialkraftkomponente 36 (Fig. 2) in der Minus-Y-Richtung angreift.

Die Größe dieser Radialkraftkomponente hängt von der Stellung der Hauptschneiden 19 und den Winkeln 35a, 35b ab. Sie ist so bemessen, daß der Bohrerkörper 1 im Betrieb geringfügig radial nach außen abgelenkt wird und damit ein Bohrloch erzeugt, dessen Durchmesser entsprechend geringfügig größer als der theoretische Bohrlochdurchmesser ist. Die so erzeugte radiale Auslenkung des Bohrerkörpers 1 beträgt bei einem Bohrerkörperdurchmesser von ca. 37 mm typischerweise ca. 100 µm; sie liegt innerhalb des elastischen Verformungsbereiches des Bohrerkörpers 1, so daß zusätzliche radiale Abstützmaßnahmen an dem Bohrerkörper 1, bspw. in Gestalt von Stützleisten, nicht erforderlich sind. Grundsätzlich ist es aber denkbar, bei Bohrern für große Lochdurchmesser erforderlichenfalls solche Stützelemente vorzusehen, die durch Anlage an der Bohrungswand die radiale Auslenkung des Bohrerkörpers auf ein vorbestimmtes Maß begrenzen.

Bei dem dargestellten Ausführungsbeispiel weist die radiale Kraftkomponente 36 in die Minus-Y-Richtung. Durch entsprechende Wahl der Stellung der Schneideinsätze 10a, 10b kann die Richtung dieser Kraftkomponente 36 zweckentsprechend verändert werden.

Bei den beschriebenen Ausführungsformen der Schneideinsätze 10 sind die Teilschneiden 22 jeweils durch Eckenfasen 15 gebildet. Grundsätzlich sind auch Ausführungsformen möglich, bei denen anstellen der Eckenfasen 15 Eckenabrundungen vorhanden sind, so daß sich entsprechend gekrümmte Teilschneidkanten 22 ergeben.

Abschließend ist noch zu bemerken, daß bei der beschriebenen Stellung der Schneideinsätze 10a, 10b in dem Bohrerkörper 1 deren wirksame Hauptschneiden 19 in den an die wirksamen Teilschneiden 22 anschließenden Abschnitten, die über die Stirnfläche des Bohrerkörpers 1 axial vorragen, radial überlappen und daß bei dem äußeren Schneideinsatz 10a der an die wirksame Teilschneide 22 in Achsrichtung anschließende, in Fig. 4 mit 190 bezeichnete Bereich der hier als Nebenschneide wirkenden, außenliegenden anderen Hauptschneide 19 gegenüber der bei 40 gestrichelt angedeuteten Bohrungswand freigestellt ist und deshalb nicht als radiale Abstützfläche oder -kante wirkt.

## Patentansprüche

1. Bohrwerkzeug für metallische Werkstoffe, Kunststoffe und dergleichen, mit einem Spanleiteinrichtungen aufweisenden Bohrerkörper (1) von im wesentlichen zylindrischer Querschnittsgestalt, sowie mit zumindest zwei plattenförmigen Schneideinsätzen (10a, 10b) die jeweils wenigstens eine von einer Schneidenecke (23) ausgehende Hauptschneide (19) tragen die im Bereiche der zugeordneten Schneidenecke (23) eine Teilschneide (22) aufweist welche durch eine Eckenfase oder -abrundung gebildet ist und die mit an der Stirnseite des Bohrerkörpers wirksamen Hauptschneiden (19) in entsprechende Ausnehmungen (9) des Bohrerkörpers eingesetzt sind, wobei ein radial außenliegender erster Schneideinsatz (10a) mit einer äußeren Schneidenecke über den Umfang des Bohrerkörpers radial vorragend angeordnet ist und ein mit seiner wirksamen Hauptschneide (19) radial im Abstand innerhalb des Flugkreises (33) der äußeren Schneidenecke des ersten Schneideinsatzes (10a) liegender zweiter Schneideinsatz (10b) mit einer wirksamen innenliegenden Teilschneide (22) die Drehachse (31) des Bohrerkörpers schneidend oder zumindest in deren unmittelbarer Nähe verlaufend angeordnet ist, wobei der äußere erste Schneideinsatz (10a) mit seiner radial außenliegenden Teilschneide (22) und der radial innenliegende zweite Schneideinsatz (10b) mit seiner radial innenliegenden Teilschneide (22) eine die Drehachse des Bohrerkörpers enthaltene Durchmesserebene (34) des Bohrerkörpers zumindest berührt und wobei bei beiden Schneideinsätzen (10a, 10b) die wirksame Hauptschneide (19) ausgehend von den beiden, die Durchmesserebene (34) mindestens berührenden Teilschneiden (22) entgegen der Drehrichtung des Bohrers von der Durchmesserebene (34) zurückgeschwenkt sind, derart, daß beim Zerspanen die an den wirksamen Hauptschneiden angreifenden Schnittkräfte eine von der Drehachse (31) nach außen gerichtete resultierende Radialkraftkomponente in der Durchmesserebene (34) ergeben.

2. Bohrwerkzeug nach Anspruch 1, dadurch gekennzeichnet, daß der radial innere zweite (10b) und/oder der radial äußere erste Schneideinsatz (10a) über seine der wirksamen Teilschneide (22) zugeordnete innere bzw. äußere Schneidenecke gegenüber der die Teilschneiden (22) enthaltenden Durchmesserebene (34) des Bohrerkörpers (1) gekippt angeordnet ist bzw. sind, derart, daß eine auf der der Hauptschneide (19) zugeordneten Breitseite des Schneideinsatzes aufliegende gedachte Berührungsebene (24) mit der Durchmesserebene einen spitzen Winkel (35a; 35b) einschließt.

3. Bohrwerkzeug nach Anspruch 2, dadurch gekennzeichnet, daß bei Schneideinsätzen (10) mit positiver Schneidengeometrie die Berührungsebene (24a) zumindest des äußeren ersten Schneideinsatzes (10a), entgegen der Drehrichtung (32) des Bohrerkörpers (1) betrachtet, hinter der Durchmesserebene (34) liegt.

4. Bohrwerkzeug nach Anspruch 2 oder 3, dadurch gekennzeichnet, daß der Winkel (35a; 35b) von 0° bis 12° beträgt.

5. Bohrwerkzeug nach einem der vorhergehenden Ansprüche, dadurch gekennzeichnet, daß bei den Schneideinsätzen (10) der an die jeweilige Teilschneide (22) anschließende Anteil der Hauptschneide (19) pfeilförmig mit einem gegenüber der Teilschneide (22) erhabenen Schneidenbereich und entsprechend gestalteter Spanfläche (29) ausgebildet ist.

6. Bohrwerkzeug nach einem der Ansprüche 1 bis 4, dadurch gekennzeichnet, daß bei den Schneideinsätzen (10) der an die jeweilige Teilschneide (22) anschließende Anteil der Hauptschneide (19) gegenüber der Teilschneide (22) konkav vertieft mit entsprechend gestalteter Spanfläche (29) ausgebildet ist.

7. Bohrwerkzeug nach Anspruch 6, dadurch gekennzeichnet, daß der konkav vertiefte Bereich der Hauptschneide (19) durch zwei zu einer tiefsten Stelle (28) zusammenlaufende, im wesentlichen gerade Hauptschneidenabschnitte gebildet ist.

8. Bohrwerkzeug nach einem der vorhergehenden Ansprüche, dadurch gekennzeichnet, daß bei den Schneideinsätzen (10) die Teilschneide (22) pfeilförmig erhaben oder konkav vertieft ausgebildet ist.

9. Bohrwerkzeug nach einem der vorhergehenden Ansprüche, dadurch gekennzeichnet, daß die plattenförmigen Schneideinsätze (10) Oktagonform mit vier sich regelmäßig wiederholenden Stirnseiten (14) aufweisen, von denen jede Stirnseite im wesentlichen dachförmig mit einer mittig zwischen den benachbarten Schneidenecken (23) verlaufender Trennkante (16) ausgebildet ist.

10. Bohrwerkzeug nach Anspruch 9, dadurch gekennzeichnet, daß an jeder der vier Stirnseiten (14) in Richtung der Trennkante (16) aneinander anschließend zwei Stirnflächenabschnitte (17, 18) vorhanden sind, von denen einer durch die entsprechende Hauptschneide (19) begrenzt ist und die einen stumpfen Winkel (21) miteinander einschließen.

11. Bohrwerkzeug nach einem der vorhergehenden Ansprüche, dadurch gekennzeichnet, daß die umsetzbaren Schneideinsätze (10) als Lochplatten ausgebildet sind.

12. Bohrwerkzeug nach einem der vorhergehenden Ansprüche, dadurch gekennzeichnet, daß die die Schneideinsätze (10) aufnehmenden Ausnehmungen (9) in achsparallel gerade genuteten Spanräumen (5) des Bohrerkörpers (1) mit zumindest einer gewölbten Spanraumwand (7) ausgebildet sind.

13. Bohrwerkzeug nach einem der vorhergehenden Ansprüche, dadurch gekennzeichnet, daß der Bohrerkörper (1) frei von eigenen, radial gegen die Bohrungswand abstützbaren Stützmitteln ist.

## Claims

1. Drilling tool for metallic materials, plastics and suchlike, having a drill body (1) which is essentially cylindrical in cross-section and is equipped with chip guide means, also having at least two plate-shaped bits (10a, 10b), which carry at least one main cutting edge (19) extending from a cutting edge corner (23) and having a cutting section (22) formed by a corner chamfer or radius in the area of the corresponding cutting edge corner (23), and which with main cutting edges (19) active on the face of the drill body are inserted in corresponding recesses (9) in the drill body, wherein a radially external first bit (10a) is arranged so as to project radially beyond the periphery of the drill body by an outer cutting edge corner and a second bit (10b) positioned with its active main cutting edge (19) radially spaced inside the circular path (33) of the outer cutting edge corner of the first bit (10a) is arranged with an active inner cutting section (22) so as to intersect the rotary axis (31) of the drill body or to at least run directly adjacent thereto, wherein the outer first bit (10a) with its radially external cutting section (22) and the radially internal second bit (10b) with its radially internal cutting section (22) at least touch a diameter plane (34) of the drill body containing the rotary axis of the drill body, and wherein, in the case of both bits (10a, 10b), the active main cutting edge (19) extending from the two cutting sections (22), that are at least touching the diameter plane, is swivelled back from the diameter plane contrary to the direction of rotation of the drill body in such a way that during chip removal the cutting forces applied to the active main cutting edges generate a resultant radial force component in the diameter plane which is directed outwards from the rotary axis (31).

2. Drilling tool according to Claim 1, characterised in that the radially internal second (10b) and/or the radially external first bit (10a) is or are arranged so as to be tilted over its inner or outer cutting edge corner corresponding to the active cutting section (22) in relation to the diameter plane (34) of the drill body (1) containing said cutting sections (22) in such a way that a theoretical contact plane (24) positioned on the broad side of the bit allocated to the main cutting edge (19) forms an acute angle (35a; 35b) with the diameter plane.

3. Drilling tool according to Claim 2, characterised in that in the case of bits (10) with positive cutting edge geometry, the contact plane (24a) of at least the outer first bit (10a) lies behind the diameter plane (34), as viewed contrary to the direction of rotation (32) of the drill body (1).

4. Drilling tool according to Claim 2 or 3, characterised in that the angle (35a; 35b) is between 0° and 12°.

5. Drilling tool according to one of the preceding claims, characterised in that in the bits (10) the portion of the main cutting edge (19) joined to the respective cutting section (22) is in the form of an arrow with a cutting area, which is raised in relation to the cutting section (22), and a correspondingly structured face (29).

6. Drilling tool according to one of Claims 1 to 4, characterised in that in bits (10) the portion of the main cutting edge (19) joined to the respective cutting section (22) is concave in relation to the cutting section (22) and has a correspondingly structured face (29).

7. Drilling tool according to Claim 6, characterised in that the concave area of the main cutting edge (19) is formed by two essentially straight main cutting edge sections converging at a deepest point (28).

8. Drilling tool according to one of the preceding claims, characterised in that in bits (10) the cutting section (22) is raised in the form of an arrow or is concave.

9. Drilling tool according to one of the preceding claims, characterised in that the plate-shaped bits (10) are octagonal in form with four regularly recurring sides (14), of which each side is essentially roof-shaped with a separating edge (16) running centrally between the adjacent cutting edge corners (23).

10. Drilling tool according to Claim 9, characterised in that each of the four sides (14) have two end surfaces (17, 18) adjoining one another in the direction of the separating edge, one of which is bordered by the corresponding main cutting edge (19), and which together form an obtuse angle (21).

11. Drilling tool according to one of the preceding claims, characterised in that the transposable bits (10) are in the form of perforated plates.

12. Drilling tool according to one of the preceding claims, characterised in that the recesses (9) housing the bits (10) are formed in concentrically straight slotted chip spaces (5) of the drill body (1) with at least one arched chip space wall (7).

13. Drilling tool according to one of the preceding claims, characterised in that the drill body (1) is not fitted with any special elements which may be supported radially against the wall of the drilled hole.

## Revendications

1. Outil de perçage pour matières métalliques, matières plastiques et analogues, comportant : un corps (1) de forme sensiblement cylindrique, présentant des moyens de guidage de copeaux; et au moins deux éléments de coupe rapportés (10a, 10b), en forme de plaquettes, lesquels portent chacun au moins un tranchant principal (19) partant d'un coin de tranchant (23) et présentant, dans la région du coin de tranchant associé (23), un tranchant partiel (22) qui est constitué par un chanfrein ou un arrondi, et lesdits éléments de coupe rapportés étant insérés dans des évidements appropriés (9) du corps, avec leurs tranchants principaux (19) actifs du côté de la face frontale dudit corps, un premier élément de coupe rapporté (10a) situé radialement à l'extérieur étant disposé avec un coin de tranchant extérieur débordant radialement de la périphérie du corps, et un deuxième élément de coupe rapporté (10b), disposé radialement à distance à l'intérieur du cercle (33) de la trajectoire du coin de tranchant extérieur du premier élément de coupe rapporté (10a), ayant un tranchant partiel (22) actif situé intérieurement, qui coupe l'axe de rotation (31) du corps ou s'étend au moins à proximité immédiate de cet axe; le premier élément de coupe rapporté extérieur (10a) touchant, par son tranchant partiel (22) situé radialement à l'extérieur, au moins un plan diamétral (34) contenant l'axe de rotation du corps de l'outil, et le deuxième élément de coupe rapporté (10b) situé radialement à l'intérieur, touchant au moins ce plan, par son tranchant partiel situé radialement à l'intérieur, et le tranchant 19) principal actif des deux éléments de coupe rapportés (10a, 10b) étant, en partant des deux tranchants partiels (22) qui touchent au moins le plan diamétral (34), déporté angulairement vers l'arrière à partir du plan diamètral (34), contre le sens de rotation de l'outil de perçage, de manière telle que, lors de l'enlèvement de copeaux, les forces de coupe attaquant les tranchants principaux actifs produisent dans le plan diamétral (34) une composante de force radiale résultante dirigée vers l'extérieur par rapport à l'axe de rotation (31).

2. Outil de perçage selon revendication 1, caractérisé par le fait que le deuxième élément de coupe rapporté (10b), radialement intérieur, et/ou le premier élément de coupe rapporté (10a), radialement extérieur, est/sont agencés inclinés par rapport au plan diamétral (34) contenant les tranchants partiels (22), cela par son/leur coin de tranchant intérieur ou extérieur conjugué au tranchant partiel actif (22), de manière telle qu'un plan de contact imaginaire (24) s'appliquant sur le côté large associé au tranchant principal (19) de l'élément de coupe rapporté forme avec le plan diamétral un angle aigu (35a,; 35b).

3. Outil de perçage selon revendication 2, caractérisé par le fait que, dans les éléments de coupe rapportés (10) ayant une géométrie de coupe positive, le plan de contact (24a) d'au moins le premier élément de coupe extérieur (10a), se trouve derrière le plan diamétral (34) en considérant l'inverse du sens de rotation (32) du corps (1) de l'outil de perçage.

4. Outil de de perçage selon revendication 2 ou 3, caractérisé par le fait que l'angle (35a; 15b) vaut de 0° à 12°.

5. Outil de perçage selon l'une des revendications précédentes, caractérisé par le fait que, dans le cas des éléments de coupe rapportés (10), la partie tranchant principal (19) se raccordant au tranchant partiel concerné (22) est façonnée en forme de flèche avec une zone de tranchant surélevée par rapport au tranchant partiel (22) et avec une surface travaillante (29) ayant une configuration correspondante.

6. Outil de perçage selon l'une des revendications 1 à 4, caractérisé par le fait que, pour ce qui est des éléments de coupe rapportés (10), la partie tranchant principal (19) se raccordant au tranchant partiel concerné (22) est en creux, avec une forme concave, par rapport au tranchant partiel (22) et est réalisée avec une surface travaillante (29) ayant une configuration correspondante.

7. Outil de perçage selon revendication 6, caractérisé par le fait que la zone de dépression concave du tranchant principal (19) est formée par deux portions de tranchant principal sensiblement rectilignes convergeant vers un point plus bas (28).

8. Outil de perçage selon l'une des revendications précédentes, caractérisé par le fait que, pour ce qui est des éléments de coupe rapportés (10), le tranchant partiel (22) forme un relief en forme de flèche ou est aménagé avec une dépression concave.

9. Outil de perçage selon l'une des revendications précédentes, caractérisé par le fait que les éléments de coupe rapportés en forme de plaquettes (10) présentent une forme octogonale avec quatre côtés frontaux (14) se répétant régulièrement, qui sont réalisés chacun sensiblement en forme de toit avec une arête de séparation (16) s'étendant en position médiane entre les coins de tranchant voisins (23).

10. Outil de perçage selon revendication 9, caractérisé par le fait que, sur chacun des quatre côtés frontaux (14), deux portions de surface frontale (17, 18), dont l'une est limitée par le tranchant principal correspondant (19) et qui forment entre elles un angle obtus (21), se raccordent en direction de l'arête de séparation (16).

11. Outil de perçage selon l'une des revendications précédentes, caractérisé par le fait que les éléments de coupe rapportés amovibles (10) sont réalisés sous forme de plaquettes à trou.

12. Outil de perçage selon l'une des revendications précédentes, caractérisé par le fait que les évidements (9) recevant les éléments de coupe rapportés (10) sont aménagés dans des espaces (5) en forme de rainures rectilignes parallèles à l'axe, prévus pour le passage des copeaux, que comporte le corps (1) de l'outil de perçage, lesdits espaces de passage de copeaux ayant au moins une paroi courbe (7).

13. Outil de perçage selon l'une des revendications précédentes, caractérisé par le fait que le corps (1) de l'outil de perçage est exempt de moyens d'appui propres pouvant prendre appui radialement contre la paroi du trou.
